# EUROPEAN PATENT APPLICATION

(11) **EP 3 792 460 A1**
(43) Date of publication of application: **17.03.2021**
(21) Application number: 18917836.1
(22) Date of filing: 16.10.2018
(51) Int. Cl.: F01N 3/04, F01N 3/20, F01N 3/023, B01J 23/70, B01J 23/34, B01D 47/06, C02F 1/52

(54) **APPARATUS FOR REDUCING POLLUTANT OF EXHAUST GAS**

(30) Priority: 09.05.2018 KR 20180053019
(71) Applicant: Samsung Heavy Ind. Co., Ltd., Seongnam-si, Gyeonggi-do 13486 (KR); Jung Won E&C Co., Ltd., Gyeongsangnam-do, 52919 (KR)
(72) Inventor: LEE, Seung Jae, Geoje-si Gyeongsangnam-do 53261 (KR); PARK, Hee Jun, Geoje-si Gyeongsangnam-do 53261 (KR); PARK, Gun Il, Geoje-si Gyeongsangnam-do 53261 (KR); CHOI, Jae Woong, Geoje-si Gyeongsangnam-do 53261 (KR); OH, Won Chul, Seoul 05409 (KR)
(74) Representative: Taruttis, Tilman
(86) International application number: PCT/KR2018/012201
(87) International publication number: WO 2019/216501

(57) **Abstract**

According to an embodiment of the present invention, an apparatus for reducing pollutants in exhaust gas is provided.

The apparatus for reducing the pollutants in the exhaust gas according to the embodiment of the present invention may include an exhaust pipe for supplying the exhaust gas from a combustion engine mounted on a offshore structure; a washing water supply pipe for supplying washing water; a scrubber to which the exhaust gas pipe and the washing water supply pipe are connected, in which an spray nozzle for spraying the washing water to the exhaust gas supplied from the exhaust gas pipe is installed inside the scrubber; a first oxidation unit for primary oxidizing the exhaust gas by spraying a first oxidant to the exhaust gas pipe; and a second oxidation unit for spraying an oxidation catalyst that is a mixture of an inorganic metal compound containing a transition metal hydroxide and an organic compound containing sulfoxide into the scrubber as a second oxidant so as to secondary oxidize the exhaust gas and to prevent reverse reaction.

## Description

### CROSS-REFERENCE TO RELATED APPLICATION

This application claims priority from Korean Patent Application No. 10-2018-0053019 filed on May 9, 2018 in the Korean Intellectual Property Office, and all the benefits accruing therefrom under 35 U. S. C. 119, the contents of which in their entirety are herein incorporated by reference.

### BACKGROUND

### 1. Technical Field

The present invention relates to an apparatus for reducing pollutants in exhaust gas, and more specifically, to an apparatus for reducing pollutants in exhaust gas that may effectively treat pollutants contained in exhaust gas generated in shipbuilding and marine fields, and washing water contaminated by purification of exhaust gas.

### 2. Description of the Related Art

Generally, various engines installed on ships burn fuel and generate power, and exhaust gas generated during a combustion process of the fuel contains harmful substances such as nitrogen oxides (NOx), sulfur oxides (SOx), or fine dust (PM), or the like. As environmental awareness gradually increases, regulations on various harmful substances contained in the exhaust gas are becoming stricter. In particular, nitrogen oxides and sulfur oxides among the exhaust gases are representative air pollutants that are subject to emission regulations from the International Maritime Organization (IMO), a United Nations oxidation organization. For nitrogen oxides, emissions have been regulated below 3.4 g/kwh since 2016, when Tier III came into effect. For sulfur oxides, emissions have been regulated below 0.1% in the Sulfur Emission Control Area (SECA) since 2015. Accordingly, various apparatuses and methods for treating the exhaust gas of a ship have been introduced.

In the case of sulfur oxides, it is common to remove it using a wet scrubber. When the exhaust gas is oxidized in advance using ozone, ultraviolet light, or the like, sulfur oxides and nitrogen oxides may be reduced at the same time when they are gas-liquid contacted with washing water.

However, an apparatus that generate ozone and ultraviolet light are too bulky and degrade space utilization in narrow ships, and also consumes a lot of electricity, which reduces the efficiency of the apparatus. In addition, sulfur oxides and nitrogen oxides oxidized before the gas-liquid contact with the washing water are easily reduced, thereby degrading the reduction effect of pollutants.

### SUMMARY

Aspects of the present invention provide an apparatus for reducing pollutants in exhaust gas that may effectively treat pollutants contained in exhaust gas generated in shipbuilding and marine fields, and washing water contaminated by purification of exhaust gas.

However, aspects of the present invention are not restricted to those set forth herein. The above and other aspects of the present invention will become more apparent to one of ordinary skill in the art to which the present invention pertains by referencing the detailed description of the present invention given below.

Apparatus for reducing pollutants in exhaust gas according to an embodiment of the present invention for achieving the technical problem includes an exhaust pipe for supplying the exhaust gas from a combustion engine mounted on a offshore structure; a washing water supply pipe for supplying washing water; a scrubber to which the exhaust gas pipe and the washing water supply pipe are connected, in which an spray nozzle for spraying the washing water to the exhaust gas supplied from the exhaust gas pipe is installed inside the scrubber; a first oxidation unit for primary oxidizing the exhaust gas by spraying a first oxidant to the exhaust gas pipe; and a second oxidation unit for spraying an oxidation catalyst that is a mixture of an inorganic metal compound containing a transition metal hydroxide and an organic compound containing sulfoxide into the scrubber as a second oxidant so as to secondary oxidize the exhaust gas and to prevent reverse reaction.

The transition metal hydroxide may be supported on silica nanoparticles.

The silica nanoparticles and the transition metal hydroxide may be present in a floating form in a mixture of the organic compound containing sulfoxide and water.

The transition metal hydroxide may include one or more metals selected from cobalt (Co), nickel (Ni), copper (Cu), iron (Fe), manganese (Mn), chromium (Cr), rhodium (Rh), ruthenium (Ru), molybdenum (Mo), osmium (Os), platinum (Pt), tungsten (W), zinc (Zn), vanadium (V), titanium (Ti), zirconium (Zr), palladium (Pd), iridium (Ir). The apparatus for reducing the pollutants in the exhaust gas may further include a storage connected to a lower portion of the scrubber and storing the washing water and the oxidation catalyst discharged from the scrubber; and a circulation pipe connecting the storage and the washing water supply pipe to recirculate the washing water and the oxidation catalyst.

The apparatus for reducing the pollutants in the exhaust gas may further include a water treatment unit for removing salt from mixed liquor of the washing water and the oxidation catalyst discharged from the scrubber, and for recirculating the washing water and the oxidation catalyst back to the scrubber.

The water treatment unit may include an oxidation catalyst separation unit for receiving the mixed liquor and separating it into the oxidation catalyst and the washing water containing the salt using a specific gravity difference.

The water treatment unit may further include a first cooling unit for receiving the washing water containing the salt and primary cooling it to precipitate sulfate; and a filter unit connected to a rear end of the first cooling unit to separate solid phase sulfate from the washing water containing the salt.

The water treatment unit may further include a separation unit installed between the first cooling unit and the filter unit, the separation unit using the specific gravity difference to separate the washing water containing no solid phase sulfate; and a second cooling unit for precipitating the sulfate by secondary cooling the washing water containing no solid phase sulfate separated from the separation unit to a lower temperature than the first cooling unit.

The washing water passed through the second cooling unit may be supplied to the separation unit again.

The scrubber may include a first contact having an upper portion communicating with the exhaust gas pipe, in which at least one stirring panel and mixer for mixing the exhaust gas with the washing water and the oxidation catalyst are installed in the first contact along a flow direction of the exhaust gas; and a second contact communicating with the first contact to form a refraction portion, in which a droplet separator for condensing moisture particles in contact with the exhaust gas is installed in the second contact.

The scrubber may further include an exhaust fan installed on a top of the droplet separator to discharge the exhaust gas to the outside.

According to the present invention, instead of oxidizing the exhaust gas by using ozone and ultraviolet rays, the first oxidant may primary oxidize the exhaust gas, and the second oxidant may secondary oxidize the exhaust gas, thereby increasing the oxidation efficiency of the exhaust gas and space utilization in the ship. In addition, the second oxidant, which is an oxidation catalyst, oxidizes the exhaust gas, and at the same time, prevents the oxidized exhaust gas from being reduced again. Therefore, the effect of reducing pollutants may be maximized.

Further, sulfate contained in the washing water contaminated by purification of the exhaust gas may be precipitated and separated from the washing water. Therefore, only the washing water containing nitric acid or nitrate may be extracted and stored separately. Accordingly, it is possible to reduce the size and number of storage tanks than the conventional case of storing both sulfate and nitrate. As a result, the cost for installing and maintaining the tank is reduced, and space utilization in the ship may be increased.

### BRIEF DESCRIPTION OF THE DRAWINGS

The above and other aspects and features of the present invention will become more apparent by describing in detail exemplary embodiments thereof with reference to the attached drawings, in which:
FIG. 1 is a view schematically showing an apparatus for reducing pollutants in exhaust gas according to an embodiment of the present invention;
FIGS. 2A and 2B are enlarged views of a stirring panel and a mixer installed in a scrubber; and
FIG. 3 is an operation view for explaining the operation of the apparatus for reducing the pollutants in the exhaust gas.

### DETAILED DESCRIPTION OF THE EMBODIMENTS

The benefits and features of the present invention and the manner of achieving them will become apparent with reference to the embodiments described in detail below with reference to the accompanying drawings. The present invention is not limited to the embodiments set forth herein, but it may be embodied in many different forms. The embodiments are merely illustrative of the present disclosure, and are provided so that a person skilled in the art may fully understand the scope of the invention. The present invention is only defined by the scope of the claims. Like reference numerals refer to like elements throughout the specification.

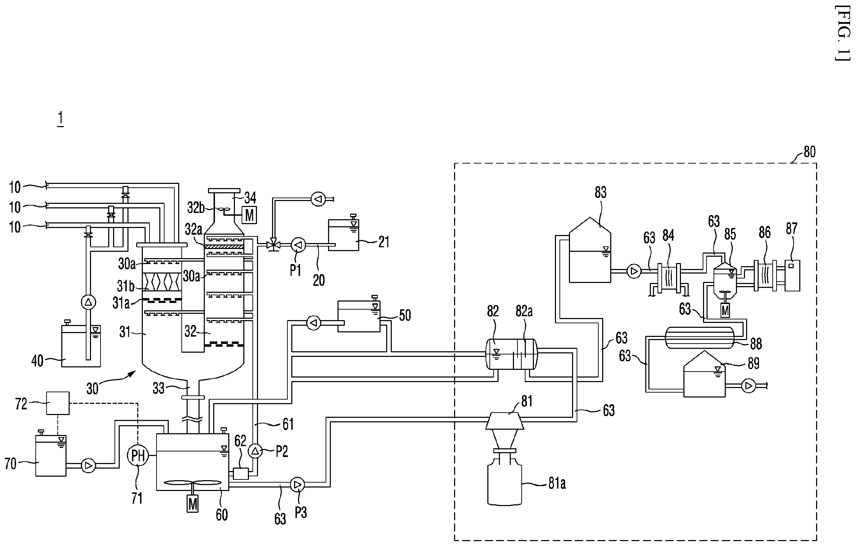

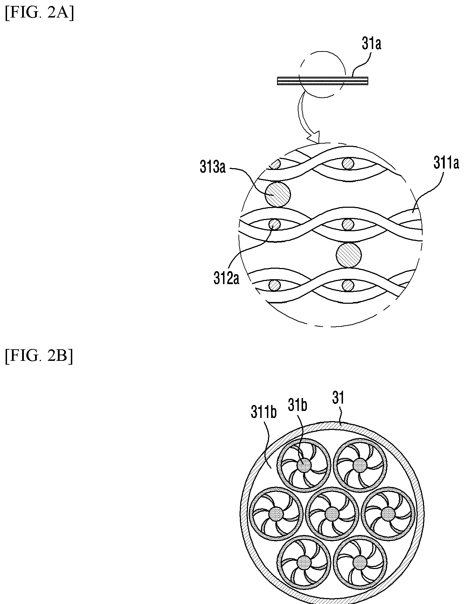

Hereinafter, an apparatus for reducing pollutants in exhaust gas according to an embodiment of the present invention will be described in detail with reference to FIGS. 1 and 2.

In the apparatus for reducing the pollutants in the exhaust gas according to the embodiment of the present invention, by reducing a concentration of various pollutants (nitrogen oxides, sulfur oxides, fine dust, etc.) contained in the exhaust gas, air suitable for an exhaust standard is discharged, and at the same time, treatment of washing water used to reduce the concentration of the exhaust gas may be simultaneously performed. The apparatus is mainly mounted on a ship and may be used to treat the exhaust gas generated in shipbuilding and marine fields.

In the apparatus for reducing the pollutants in the exhaust gas, instead of oxidizing the exhaust gas by using ozone and ultraviolet rays, the first oxidant may primary oxidize the exhaust gas, and the second oxidant may secondary oxidize the exhaust gas, thereby increasing the oxidation efficiency of the exhaust gas and space utilization in the ship. In addition, the second oxidant, which is an oxidation catalyst, oxidizes the exhaust gas, and at the same time, prevents the oxidized exhaust gas from being reduced again. Therefore, the effect of reducing pollutants may be maximized. Further, sulfate contained in the washing water contaminated by purification of the exhaust gas may be precipitated and separated from the washing water. Therefore, only the washing water containing nitric acid or nitrate may be extracted and stored separately. Accordingly, it is possible to reduce the size and number of storage tanks than the conventional case of storing both sulfate and nitrate. As a result, the cost for installing and maintaining the tank is reduced, and space utilization in the ship may be increased.

Hereinafter, the apparatus for reducing the pollutants in the exhaust gas will be described in detail with reference to FIGS. 1, 2A and 2B.

FIG. 1 is a view schematically showing an apparatus for reducing pollutants in exhaust gas according to the embodiment of the present invention, and FIGS. 2A and 2B are enlarged views of a stirring panel and a mixer installed in a scrubber.

The apparatus 1 for reducing the pollutants in the exhaust gas according to the present invention includes an exhaust gas pipe 10, a washing water supply pipe 20, a scrubber 30, a first oxidation unit 40, and a second oxidation unit 50.

The exhaust gas pipe 10 is a pipe that supplies exhaust gas of a combustion engine (not shown) or a boiler (not shown) mounted on an offshore structure, and is connected to the scrubber 30 to be described later. The exhaust gas pipe 10 is directly connected to an exhaust port of the combustion engine, so that high-temperature exhaust gas directly moves or passes through various heat exchangers to recirculate most of exhaust heat and the remaining waste gas may move. Here, the combustion engine is a device that generates various powers required for a ship by burning fuel, and may be formed of, for example, a main engine, a generator, or the like. The exhaust gas pipe 10 may be connected to exhaust ports of a plurality of combustion engines, in which the plurality of combustion engines may selectively operate. The combustion engine usually generates power by burning fossil fuel, and thus generates exhaust gas according to combustion of the fossil fuel. The generated exhaust gas contains a large amount of nitrogen oxides, sulfur oxides, and fine dust, and is supplied to the scrubber 30 through the exhaust gas pipe 10 connected to one side of the combustion engine.

The washing water supply pipe 20 is a pipe that supplies washing water, which is at least one of seawater or fresh water or a mixture of the seawater and the fresh water, to the scrubber 30. One end of washing water supply pipe 20 may be connected to at least one of a sea-chest and a fresh water storage tank 21, and the other end thereof may be connected to the scrubber 30. In other words, the washing water supply pipe 20 may selectively receive the seawater and the fresh water and supply it to the scrubber 30. Hereinafter, it is limited to the case where the washing water is the fresh water, and the process in which the fresh water mainly flows through the washing water supply pipe 20 and is supplied to the scrubber 30 will be described in more detail. One end of the washing water supply pipe 20 is connected to the fresh water storage tank 21, and the other end thereof is connected to the scrubber 30. Here, at least one pump P1 that presses the fresh water may be installed on the washing water supply pipe 20 to smoothly supply the fresh water to the scrubber 30. It is shown in the drawing that the seawater supplied from the sea-chest joins the washing water supply pipe 20 at a rear end of the pump P1. However, it is not limited to, and the seawater supplied from the sea-chest may be directly supplied to the scrubber 30.

As described above, the exhaust gas pipe 10 and the washing water supply pipe 20 may be respectively connected to the scrubber 30 and the scrubber 30 may be provided with a spray nozzle 30a spraying the washing water into the exhaust gas supplied from the exhaust gas pipe 10 therein, thereby enabling gas-liquid contact of the exhaust gas and the washing water. The spray nozzle 30a sprays the washing water in the form of particulates, and may be branched into a plurality of pieces and be arranged in a line along a flow direction of the exhaust gas. As a plurality of spray nozzles 30a are arranged in a line along the flow direction of the exhaust gas, a contact area and the number of contact between the exhaust gas and the washing water are increased. Therefore, contaminants such as nitrogen oxide, sulfur oxide, fine dust, or the like contained in the exhaust gas may be effectively removed. The exhaust gas from which the contaminants such as nitrogen oxides, sulfur oxides, fine dust, or the like are removed may be discharged to the outside through an exhaust pipe 34. The exhaust gas discharged through the exhaust pipe 34 is in a state in which the contaminants such as nitrogen oxides, sulfur oxides, fine dust, or the like are removed, so that it meets the exhaust standard and may be released into the atmosphere as it is. The scrubber 30 includes a first contact 31 and a second contact 32.

The first contact 31 is a cylindrical member forming one side of the scrubber 30, and an upper portion thereof may be in communication with the exhaust gas pipe 10. Since the upper portion of the first contact 31 communicates with the exhaust gas pipe 10, the exhaust gas flowing into the first contact 31 may flow downward. The first contact 31 is provided with at least one of a stirring panel 31b and a mixer 31a for inducing a rotational flow therein, so that the exhaust gas, the washing water, and an oxidation catalyst supplied from the second oxidation unit 50 to be described later may be mixed. By mixing the exhaust gas, the washing water, and the oxidation catalyst, the exhaust gas is oxidized and contaminants contained in the exhaust gas may be removed. In addition, a temperature of the exhaust gas may be reduced by the washing water and the oxidation catalyst, thereby reducing a flow rate and volume of the exhaust gas. Further, the stirring panel 31b and the mixer 31a block a reverse flow of the exhaust gas to prevent backflow to the exhaust gas pipe 10.

Referring to FIG. 2A, the mixer 31a is a net-shaped member that forms a sieve by weaving metal wire 311a in a vertical and horizontal direction, and a plurality of mixers 31a may be arranged to be offset from each other inside the first contact 31. A first support 312a is interposed between the metal wires 311a interwoven with each other to form a unit sieve. A second support 313a may be interposed between the unit sieves overlapping each other to be spaced apart from each other. Since the mixer 31a is formed of the net-shaped member, the contact area between the exhaust gas and the washing water and the oxidation catalyst increases, so that the removal efficiency of contaminants may be increased. In addition, the scrubber 30 may be miniaturized. Further, since pressure loss in the scrubber 30 is small, a large amount of exhaust gas may be processed by the miniaturized scrubber 30. Moreover, power of an inlet fan (not shown) for guiding the exhaust gas to the scrubber 30 may be reduced. Also, there is no closed surface other than the metal wire 311a interwoven in the vertical and horizontal direction, and pores may be provided at regular intervals by a net structure, so that a ratio of opening a pore is high. In addition, the removal efficiency and pressure change may be easily adjusted by adjusting the number of the mixer 31a or the unit sieve according to conditions of the exhaust gas.

Next, referring to FIG. 2B, the stirring panel 31b is a cylindrical member having a vane which induces vortex flow therein, and a plurality of stirring panels 31b may be arranged on the same plane. Here, the plurality of stirring panels 31b may be fixed to the first contact 31 by a separate fixing plate 311b. However, it is not limited that the plurality of stirring panels 31b are arranged on the first contact 31. For example, a single stirring panel 31b may be arranged. The vane formed on the stirring panel 31b has a streamlined cross-section, and is twisted at a certain angle so that one side and the other side may be out of joint from each other. Therefore, the exhaust gas, the washing water, and the oxidation catalyst may be mixed smoothly with vortex flow, and it is possible to prevent some of the exhaust gas having different pressures from being induced in a reverse direction to flow backward.

In the drawing, it is shown that the spray nozzle 30a, the stirring panel 31b, the mixer 31a, and the spray nozzle 30a are sequentially arranged inside the first contact 31 along the flow direction of the exhaust gas. However, it is not limited to this, and the arrangement may be variously modified. The first contact 31 communicates with the second contact 32.

The second contact 32 is a cylindrical member that forms the other side of the scrubber 30. A lower side of the second contact 32 may communicate with the first contact 31 to form a refraction portion, and an upper side thereof may communicate with the exhaust pipe 34. As the lower side of the second contact 32 communicates with the first contact 31 and the upper side thereof communicates with the exhaust pipe 34, the exhaust gas flowing downward along the first contact 31 and flowing into the second contact 32 may flow upward and be discharged through the exhaust pipe 34. In addition, the second contact 32 communicates with the first contact 31 to form a U-shaped bend, so that a flow path of the exhaust gas inside the scrubber 30 becomes long. Therefore, the time at which the exhaust gas and the washing water are contacted increases, so that the effect of reducing the pollutants may be maximized. The second contact 32 may be provided with the mixer 31a on the lower side in communication with the first contact 31, and may be provided with the plurality of spray nozzles 30a along the flow direction of the exhaust gas, like the first contact 31. In addition, the second contact 32 may be provided with a droplet separator 32a to condense moisture particles in contact with the exhaust gas in an upper portion close to the exhaust pipe 34. By installing the droplet separator 32a, the moisture particles are removed from the exhaust gas containing the moisture particles by the contact with the washing water, and the exhaust gas may be discharged through the exhaust pipe 34 in a dried state. In addition, since the moisture particles removed from the exhaust gas fall downward and may gas-liquid contact again with the exhaust gas flowing upward, residual contaminants may be further removed. An exhaust fan 32b for discharging the exhaust gas to the outside is installed on the second contact 32 or the exhaust pipe 34 at a top of the droplet separator 32a, and increases through the stirring panel 31b and the mixer 31a, so that the pressure of the increased exhaust gas passing through the stirring panel 31b and the mixer 31a may be partially reduced.

The exhaust gas flowing through the exhaust gas pipe 10 may be primary oxidized by the first oxidation unit 40. The first oxidation unit 40 sprays the first oxidant into the exhaust gas pipe 10 to primary oxidize the exhaust gas. Here, the first oxidant may be one of hydrogen peroxide (H₂O₂), permanganate (HMnO₄), hypobromic acid (HBrO), dioxide (ClO₂), sodium hypochlorite (NaOCI), trisodium salt (KHSO₅), and ozone (O₃). The first oxidation unit 40 primary oxidizes the exhaust gas by spraying the first oxidant to the exhaust gas pipe 10, so that nitrogen monoxide contained in the exhaust gas may be oxidized to nitrogen dioxide. The nitrogen dioxide is more readily soluble in water than the nitrogen monoxide, so it may be easily dissolved in the scrubber 30 and removed. The first oxidation unit 40 may use a nozzle, an ultrasonic vibrator, a spray, a heating plate, or the like to atomize or dropletize or vaporize the first oxidant, and increase the oxidation efficiency of the exhaust gas. The nitrogen oxide contained in the exhaust gas is primary oxidized by reacting according to the following reaction formula.

### <Reaction Formula>

H₂O₂ → H₂O + O⁻

NO + O⁻ → NO₂

After being primary oxidized by the first oxidation unit 40, the exhaust gas supplied to the scrubber 30 may be secondary oxidized by the second oxidation unit 50.

The second oxidation unit 50 injects the second oxidant into the scrubber 30 to secondary oxidize the exhaust gas and prevent reverse reaction. Here, the second oxidant may mean an oxidation catalyst that is a mixture of an inorganic metal compound including a transition metal, and an organic compound containing sulfoxide. The exhaust gas artificially oxidized by the first oxidant may be easily reduced back to its original state. When the exhaust gas is reduced again, it is easily dissolved in the washing water and is not removed. Therefore, the second oxidation unit 50 may inject the second oxidant to secondary oxidize the exhaust gas, and at the same time, prevent the exhaust gas from being reduced again. By preventing the second oxidant from being reduced again at the same time as secondary oxidizing the exhaust gas, the contaminants contained in the exhaust gas may be easily dissolved and removed in the washing water even if the oxidation efficiency by the first oxidant is partially reduced. The second oxidant may be sprayed to the first contact 31 and the second contact 32 through the washing water supply pipe 20, respectively, or may be sprayed to the first contact 31 and the second contact 32 through separate spray devices such as a nozzle and a spray.

The second oxidant is an agent in which a transition metal hydroxide containing at least one metal selected from cobalt (Co), nickel (Ni), copper (Cu), iron (Fe), manganese (Mn), chromium (Cr), rhodium (Rh), ruthenium (Ru), molybdenum (Mo), osmium (Os), Platinum (Pt), Tungsten (W), zinc (Zn), vanadium (V), titanium (Ti), zirconium (Zr), palladium (Pd), iridium (Ir) is supported on silica nanoparticles, which are carriers in the shape of tubes. As the transition metal hydroxide having an oxidizing function is supported on the silica nanoparticles, the contact area with the exhaust gas is increased, so that oxidation and reverse reactions may be effectively prevented. In addition, the silica nanoparticles and the transition metal hydroxide may be present in a suspended form in a mixture of water and an organic compound containing sulfoxide. When the silica nanoparticles and the transition metal hydroxide are present in the mixture of the organic compound containing sulfoxide and the water, the second oxidant becomes a liquid organic-inorganic mixture, which may be particulate, dropletized, or vaporized. Therefore, the efficiency of oxidation and reverse reaction prevention may be increased.

The nitrogen oxide contained in the exhaust gas reacts according to the following reaction formula to secondary oxidize and to prevent the reverse reaction.

### <Reaction Formula>

second oxidation: LPC · Co/SiO₂ + NO + 1/2O₂ → NO₂
prevention of reverse reaction: 2NO₂ + H₂O + 1/2O₂ → 2HNO₂

HNO₂ + LPC · Co/SiO₂ → LPC · Co/SiO₂ . HNO₂

LPC · Co/SiO₂ · HNO₂ + 1/2O₂ → HNO₃ + LPC · Co/SiO₂ · HNO₃

(Here, LPC means an oxidation catalyst having a chemical formula RCO · Co/SiO₂=OHR Also, LPC · Co/SiO₂ means an oxidizing catalyst that is an organic-inorganic mixture containing a transition metal hydroxide supported on silica nanoparticles. Further, R is an alkyl group and means the rest of atomic groups except one hydrogen in chain-like saturated hydrocarbon.)

Nitrogen monoxide (NO) is secondary oxidized to nitrogen dioxide (NO₂) by reacting with the second oxidant (LPC · Co/SiO₂). Nitrogen dioxide (NO₂) and water (H₂O) react to form nitrous acid (HNO₃) as nitrous acid (HNO₂) is reacted with the second oxidant (LPC · Co/SiO₂) and oxygen (O₂), and reacts with alkali chemicals (Na⁺, NH₄⁺, Mg²⁺, Ca²⁺) or the like to form salt to prevent the reverse reaction.

The sulfur oxide contained in the exhaust gas reacts according to the following reaction formula to become sulfurous acid, and the sulfurous acid is oxidized in the oxidation catalyst, and becomes sulfuric acid.

### <Reaction Formula>

SO₂ + H₂O → H₂SO₃

H₂SO₃ + LPC · Co/SiO₂ → LPC · Co/SiO₂ · H₂SO₃

LPC · Co/SiO₂ · H₂SO₃ + O₂ → H₂SO₄ + LPC · Co/SiO₂ · H₂SO₄

A washing water discharge pipe 33 is connected to a lower portion of the scrubber 30. The washing water discharge pipe 33 is a pipe for discharging the washing water inside the scrubber 30 and the oxidation catalyst that is the second oxidant. One end of the washing water discharge pipe 33 may be connected between the first contact 31 and the second contact 32, and the other end thereof may be connected to the storage 60.

The storage 60 is connected to the lower portion of the scrubber 30 to store the washing water and the oxidation catalyst discharged from the scrubber 30. As described above, the second oxidant is the oxidation catalyst that is the mixture of the inorganic compound containing the transition metal hydroxide such as Co(OH)₂/SiO₂ and the organic compound containing sulfoxide. Therefore, the second oxidant may be phase-separated from the washing water due to the specific gravity difference with the washing water when stored in the storage 60. By providing the stirrer inside the storage 60, it is possible to prevent the second oxidant from being separated from the washing water. In addition, even if the second oxidant is phase-separated from the washing water, it may be mixed with the washing water again. As illustrated, the second oxidation unit 50 may supply the second oxidant to the storage 60. The second oxidant supplied to the storage 60 may be supplied into the scrubber 30 through a circulation pipe 61 to be described later.

A neutralizing agent supply unit 70 may be connected to one side of the storage 60. The neutralizing agent supply unit 70 neutralizes the acidified washing water by supplying a neutralizing agent to the storage 60. For example, the neutralizing agent is an alkali solution such as sodium hydroxide (NaOH) or sodium hypochlorite (NaOCI) or ammonia water, and may be obtained by electrolysis of seawater or the like. The neutralizing agent supply unit 70 may be simply a tank in which the neutralizing agent is stored, or a device for directly producing a neutralizing agent, including an electrolysis device. Here, the neutralizing agent supply unit 70 may supply the neutralizing agent to the storage 60 or an upper portion of the second contact unit 32 of the scrubber 30. The washing water is neutralized according to a reaction formula below.

### <Reaction Formula>

HNO₃ + LPC · Co/SiO₂ · HNO₃ + NaOH → NaNO₃ + H₂O + LPC · Co/SiO₂

H₂SO₄ + LPC · Co/SiO₂ · H₂SO₄ + NaOH → Na₂SO₄ + 2H₂O + LPC · Co/SiO₂

The washing water supplied into the scrubber 30 is in gas-liquid contact with the exhaust gas, and nitrogen oxide and sulfur oxide may be dissolved to form strong acid nitric acid and sulfuric acid. As the neutralizing agent supply unit 70 supplies the neutralizing agent to neutralize strong acid wash water, a hydrogen ion concentration index (pH) of the washing water may be adjusted to a condition suitable for reuse or discharge at sea by circulating with the scrubber 30, for example, about pH 6.0-7. The storage 60 may be provided with a sensor unit 71 for measuring pH therein. The neutralizing agent supply unit 70 may adjust the amount of the neutralizing agent supplied to the storage 60 in response to a pH value measured by the sensor unit 71. The neutralizing agent supply unit 70 and the sensor unit 71 may be associated with the control unit 72, respectively. The control unit 72 may receive the pH value measured by the sensor unit 71 to control an operation of the neutralizing agent supply unit 70. The circulation pipe 61 may be connected between the storage 60 and the washing water supply pipe 20. The circulation pipe 61 is a pipe for recirculating some of the washing water and the oxidation catalyst stored in the storage 60, for example, about 90%. A first filtration unit 62 and a pump P2 may be provided on the circulation pipe 61. The first filtration unit 62 removes solid particles having large particles from the mixed liquor of the washing water and the oxidation catalyst flowing through the circulation pipe 61, and may include any one of a centrifuge, a gravity separator, or a filter. A solid material contained in the mixed liquor of the washing water and the oxidation catalyst has a high viscosity due to an organic material, the oxidation catalyst, or the like, and has a sticky property. Therefore, if the solid phase material is not removed, it may accumulate inside a flow pipe 63 and various devices, which may cause clogging or corrosion of the pipe, corrosion or failure of the device. To prevent this, the first filtration unit 62 may be arranged on a front end side of the circulation pipe 61 adjacent to the storage 60 to remove the solid-phase material having large particles. A pump P2 is provided on the circulation pipe 61 at a rear end of the first filtration unit 62. The pump P2 may pressurize the mixed liquor of the washing water and the oxidation catalyst from which the solid phase material is removed to supply it the washing water supply pipe 20.

The remaining part of the washing water and the oxidation catalyst stored in the storage 60, for example, about 10% may be supplied to a water treatment unit 80 through the flow pipe 63. Here, a pump P3 is also provided on the flow pipe 63. The pump P3 may pressurize the mixed liquor of the washing water and the oxidation catalyst to supply it to the water treatment unit 80. The water treatment unit 80 may remove salt from the mixed liquor of the washing water and the oxidation catalyst discharged from the scrubber 30, and may recirculate the salt-removed washing water and oxidation catalyst back to the scrubber 30. The water treatment unit 80 includes a second filtration unit 81, an oxidation catalyst separation unit 82, a first cooling unit 84, a separation unit 85, a second cooling unit 86, and a filter unit 88.

The second filtration unit 81 is a device for separating solid phase particles contained in the mixed liquor of the washing water and the oxidation catalyst, and may be connected on the flow pipe 63 between the storage 60 and the oxidation catalyst separation unit 82 to be described later. As described above, the solid particles contained in the mixed liquor of the washing water and the oxidation catalyst have a high viscosity due to an organic material, the oxidation catalyst, or the like, and has a sticky property. Therefore, the second filtration unit 81 may be arranged on a front end side of the flow pipe 63 close to the storage 60 to remove the solid phase particles contained in the mixed liquor of the washing water and the oxidation catalyst in advance. The second filtration unit 81, like the first filtration unit 62, may include any one of a centrifugal separator, a gravity separator, and a filter. The solid phase particles removed from the second filtration unit 81 may be stored in a separate sludge tank 81a. For example, when the second filtration unit 81 separates the solid phase particles using a filter, the solid phase particles may be filtered into a cake shape. In the second filtration unit 81, the mixed liquor of the washing water and the oxidation catalyst from which the solid phase particles are separated are moved to the oxidation catalyst separation unit 82.

The oxidation catalyst separation unit 82 is supplied with the mixed liquor of the washing water and the oxidation catalyst, and separates it into the oxidation catalyst and the washing water containing salt, and it may be connected on the flow pipe 63 between the second filtration unit 81 and the first cooling unit 84 to be described later. The washing water in contact with the exhaust gas inside the scrubber 30 may include oxidized sulfur oxides, sulfate and nitrate produced by dissolving nitrogen oxides, and the oxidation catalyst. The oxidation catalyst separation unit 82 may separate the oxidation catalyst from the mixed liquor using the specific gravity difference. That is, the oxidation catalyst separation unit 82 may be a conventional gravity separator. As described above, the second oxidant is an oxidation catalyst that is a mixture of an inorganic metal compound containing a transition metal hydroxide and an organic compound containing a sulfoxide, and contains an oil component. Therefore, a specific gravity of the second oxidant is about 0.9, which is smaller than that of the washing water. Therefore, when the mixed liquor of the washing water and the oxidation catalyst is supplied to the oxidation catalyst separation unit 82, the washing water having a relatively high specific gravity sinks downward, and the oxidation catalyst having a relatively small specific gravity floats upward, so that the washing water and the oxidation catalyst may be separated from each other. The separated oxidation catalyst may be supplied to the second oxidation unit 50 or the scrubber 30 or the storage 60 or the washing water supply pipe 20 through a separate pipe.

Since the oxidation catalyst separation unit 82 has at least one partition wall 82a vertically installed therein, it may separate the washing water containing the salt from the washing water containing no salt among the washing water that the oxidation catalyst is separated. Among the washing water that the oxidation catalyst may be separated, the washing water containing the salt is supplied to a salt storage tank 83 to be described later through the flow pipe 63, and the washing water containing no salt may be supplied to the washing water supply pipe 20 or the storage 60 or the scrubber 30 through a separate pipe. However, the oxidation catalyst separation unit 82 is not limited to be formed by the gravity separator, and it may be transformed into various devices capable of separating the oxidizing catalyst from the mixed liquor of the washing water and the oxidizing catalyst. The washing water from which the oxidation catalyst is removed and containing the salt may be supplied to the salt storage tank 83 through the flow pipe 63.

The salt storage tank 83 stores the washing water from which the oxidation catalyst is removed and containing the salt, and may also act as a kind of buffer tank so that a certain amount of washing water may be circulated through the flow pipe 63. The sulfate and nitrate in a solid phase included in the washing water have the specific gravity of about 1. 2, which is larger than the specific gravity of the washing water, and also has a difference in solubility, and thus, it is settled in the salt storage tank 83 after being separated from the washing water. The washing water from which the solid phase salt is removed may be supplied to the first cooling unit 84 through the flow pipe 63. However, the salt storage tank 83 is not limited to be connected to the flow pipe 63 at a rear end of the oxidation catalyst separation unit 82. If necessary, the salt storage tank 83 may be omitted. The washing water from which the solid phase salt is removed and containing liquid phase salt is supplied to the first cooling unit 84.

The first cooling unit 84 is supplied with the washing water containing the liquid phase salt and primary cools it to precipitate sulfate, and it may be connected on the flow pipe 63 between the salt storage tank 83 and the separation unit 85. The first cooling unit 84 may cool the washing water containing the liquid phase salt to about 20°C by heat exchanging it with seawater flowing in from the outside. The seawater introduced from the outside and supplied to the scrubber 30 for the purpose of the washing water is about 20°C, and the washing water discharged after the gas-liquid contact with the high temperature exhaust gas inside the scrubber 30 is about 50 to 55°C. The first cooling unit 84 may cool the washing water to about 20°C by heat exchanging between the seawater at about 20°C and the washing water at about 50∼55°C. When the washing water is cooled to about 20°C, some of the sulfates dissolved in a liquid state in the washing water may be precipitated in a solid state. In other words, in the case of sulphate, which has a relatively large change in solubility according to temperature, some of them are precipitated in a solid state when the washing water is cooled. Further, nitrate, which has a relatively small change in solubility according to temperature, remains in a liquid state even if the washing water is cooled. The first cooling unit 84 may naturally cool the washing water through the heat exchange between the seawater and the washing water, thereby reducing the cost of cooling the washing water and precipitating the sulfate.

The filter unit 88 separates the sulfate in a solid phase from the washing water containing the salt, and may be connected to the flow pipe 63 at a rear end of the first cooling unit 84. The filter unit 88 may be formed of, for example, a phase separator to separate the sulfate in the solid phase and to discharge the separated sulfates to the sea. The sulfate is high in solubility in water, so there is no separate regulation, so it may be discharged as it is in the sea. In particular, the solid phase particles contained in the washing water and the oxidation catalyst are pre-removed from the above-described second filtration unit 81 and the oxidation catalyst separation unit 82, respectively. Therefore, the sulfate separated from the filter unit 88 may be in a pure state containing little impurities. However, the filter unit 88 is not limited to be formed as the phase separator, and it may be transformed into various devices capable of separating the precipitated sulfate from the washing water. For example, the filter unit 88, like the second filtration unit 81, may include any one of a centrifugal separator, a gravity separator, and a filter. The filter unit 88 may separate not only the sulfate but also the nitrate precipitated partially in the first cooling unit 84 in a solid state. The washing water from which the solid phase sulfate has is removed from the filter unit 88 is stored in the storage tank 89.

The storage tank 89 stores the washing water from which the solid phase sulfate is removed and containing nitric acid or nitrate, and may be connected to the flow pipe 63 at a rear end of the filter unit 88. In other words, the washing water in which nitric acid or liquid state nitrate is concentrated at a high concentration is stored in the storage tank 89. Since most of the sulfate is removed and only the washing water containing the nitric acid or the nitrate is stored in the storage tank 89, compared to the conventional case of storing the washing water containing both the sulfate and the nitrate, it is possible to reduce the size and number of tanks required, thereby reducing the cost for installing and maintaining the tank. In addition, the space required for the arrangement of the tank may be reduced, thereby increasing the space utilization in a narrow ship.

The washing water stored in the storage tank 89 may be supplied to a separate treatment facility and be treated when the ship reaches a port or the like. For example, the nitrate contained in the washing water may be used as an agricultural fertilizer. As described above, the washing water stored in the storage tank 89 is high in value as a fertilizer since the impurities are removed and the nitric acid or the nitrate is concentrated at a high concentration. In addition, the stored washing water may be diluted with seawater or fresh water on the high seas and discharged in a state containing nitrate below a regulated concentration.

The separation unit 85 may be installed on the flow pipe 63 between the first cooling unit 84 and the filter unit 88.

The separation unit 85 separate the washing water containing the solid phase sulfate from the washing water containing no sulfate using the specific gravity difference, and may be formed of, for example, a phase separator. The separation unit 85 may supply the washing water containing the sulfate to the filter unit 88, and supply the washing water containing no sulfate to the second cooling unit 86.

The second cooling unit 86 secondary cools the washing water containing no solid phase sulfate separated from the separation unit 85 to a lower temperature than the first cooling unit 84 to further precipitate the sulfate. The second cooling unit 86 may be connected on the flow pipe 63 between the separation unit 85 and the filter unit 88. The second cooling unit 86 has one side connected to the separation unit 85 and the other side connected to the cooler 87, so that it may cool the washing water containing no solid phase sulfate to about 0-10°C by heat exchanging it with a refrigerant. Since the washing water is cooled to about 0 to 10°C, 90% or more of the sulfate dissolved in the liquid state is precipitated, and at the same time, about 30% of the nitrate may be precipitated. In other words, the washing water cooled to 0 to 10°C may include solid state sulfate (90% or more), solid state nitrate (about 30%), sulfuric acid or liquid state sulfate (less than 10%), and nitric acid or liquid state nitrate (about 70%).

The washing water passed through the second cooling unit 86 is supplied to the separation unit 85 again in a state containing the solid phase sulfate and the solid phase nitrate. The separation unit 85 separates the washing water passed through the second cooling unit 86 into the washing water containing the solid state sulfate and the solid state nitrate and the washing water containing no solid state sulfate and solid state nitrate. Here, the washing water containing the solid state sulfate and the solid state nitrate may be supplied to the filter unit 88, and the washing water containing no solid state sulfate and solid state nitrate may be supplied to the second cooling unit 86 again. In other words, the separation unit 85 mixes the washing water passed through the first cooling unit 84 and the second cooling unit 86, respectively, and separate it into the washing water containing the solid state sulfate and the solid state nitrate, and the washing water containing no solid state sulfate and solid state nitrate. The separation unit 85 mixes the washing water passed through the first cooling unit 84 and the second cooling unit 86, respectively, so that some of sulfuric acid or liquid state sulfate and nitric acid or liquid state nitrate contained in the washing water passing through the first cooling unit 84 may be additionally precipitated.

The separation unit 85 may be provided with a stirrer therein as necessary. When the stirrer is provided, mixing of the washing water passing through the first cooling unit 84 and the washing water passing through the second cooling unit 86 may be more easily performed. In addition, the filter unit 88 may separate the precipitated sulfate and nitrate and discharge them to the sea. As described above, since only about 30% of the nitrate is precipitated, after measuring and controlling a concentration of the nitrate, only the amount that may be discharged to the sea may be discharged to the sea.

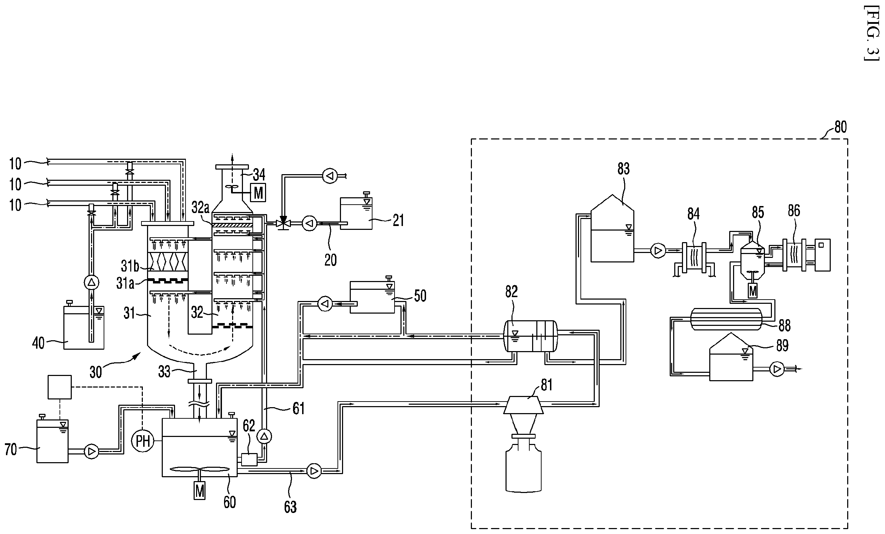

Hereinafter, an operation process of the apparatus 1 for reducing the pollutants in the exhaust gas will be described in more detail with reference to FIG. 3.

FIG. 3 is an operation view for explaining the operation of the apparatus for reducing the pollutants in the exhaust gas.

In the apparatus 1 for reducing the pollutants in the exhaust gas according to the present invention, instead of oxidizing the exhaust gas by using ozone and ultraviolet rays, the first oxidant may primary oxidize the exhaust gas, and the second oxidant may secondary oxidize the exhaust gas, thereby increasing the oxidation efficiency of the exhaust gas and space utilization in the ship. In addition, the second oxidant, which is an oxidation catalyst, oxidizes the exhaust gas, and at the same time, prevents the oxidized exhaust gas from being reduced again. Therefore, the effect of reducing pollutants may be maximized. Further, sulfate contained in the washing water contaminated by purification of the exhaust gas may be precipitated and separated from the washing water. Therefore, only the washing water containing nitric acid or nitrate may be extracted and stored separately. Accordingly, it is possible to reduce the size and number of storage tanks than the conventional case of storing both sulfate and nitrate. As a result, the cost for installing and maintaining the tank is reduced, and space utilization in the ship may be increased.

The exhaust gas flowing through the exhaust gas pipe 10 is primary oxidized by the first oxidant sprayed from the first oxidation unit 40 and supplied to the scrubber 30. The washing water stored in the fresh water storage tank 21 is supplied to the scrubber 30 through the washing water supply pipe 20. The scrubber 30 removes nitrogen oxides, sulfur oxides, fine dust, or the like contained in the exhaust gas by causing the gas-liquid contact of the exhaust gas and the washing water. At the same time, the second oxidation unit 50 sprays the oxidation catalyst, which is the mixture of the inorganic metal compound containing the transition metal hydroxide and the organic compound containing sulfoxide, into the scrubber 30 as the second oxidant, so that it oxidizes the exhaust gas and prevents the reverse reaction in which the oxidized exhaust gas is reduced again. Here, the second oxidation unit 50 may directly supply the second oxidant into the scrubber 30, or may inject it into the washing water supply pipe 20 or the storage 60 to be supplied to the scrubber 30. The exhaust gas, the washing water, and the oxidation catalyst may be mixed by the mixer 31a and the stirring panel 31b provided on the first contact 31 of the scrubber 30. As a result, the exhaust gas is maintained in an oxidized state and contaminants may be removed. The exhaust gas from which the contaminants have been removed may be discharged through the exhaust pipe 34 after the moisture particles are removed by the droplet separator 32a installed in the second contact 32.

The washing water in contact with the exhaust gas and containing the contaminants is stored in the storage 60 through the washing water discharge pipe 33. The mixed liquor of the washing water and the oxidation catalyst stored in the storage 60 may be neutralized to an appropriate pH by the neutralizing agent supplied from the neutralizing agent supply unit 70. The mixed liquor of the washing water and the oxidation catalyst which is neutralized may be partially circulated through the circulation pipe 61 to the scrubber 30, and partially water treated by the flow pipe 63. The first filtration unit 62 and the second filtration unit 81 are installed on the circulation pipe 61 and the flow pipe 63, respectively, so that the solid particles having the large particles may be removed.

The washing water from which the solid particles are removed in the second filtration unit 81 is supplied to the oxidation catalyst separation unit 82 to separate the oxidation catalyst. The oxidation catalyst separated from the washing water may be supplied to the second oxidation unit 50 or the scrubber 30 or the storage 60 or the washing water supply pipe 20 through a separate pipe to be reused. In addition, the washing water containing no salt among the washing water from which the oxidation catalyst is removed may be supplied to the washing water supply pipe 20 or the storage 60 or the scrubber 30 through a separate pipe.

The washing water containing the salt among the washing water from which the oxidation catalyst is removed may be supplied to the salt storage tank 83 through the flow pipe 63 to remove the salt in the solid phase. The washing water from which the solid phase salt is removed in the salt storage tank 83 is first cooled through heat exchange with the seawater in the first cooling unit 84. At this point, about 30% of the sulfate dissolved in the liquid state in the washing water may be precipitated in a solid state. The precipitated sulfate is included in the washing water and supplied to the separation unit 85. The separation unit 85 separates it into the washing water containing the solid state sulfate and the washing water containing no solid state sulfate. Then, the separation unit 85 supplies the washing water containing the solid state sulfate to the filter unit 88, and supplies the washing water containing no solid state sulfate to the second cooling unit 86.

The second cooling unit 86 second cools the washing water containing no solid state sulfate through the heat exchange with the refrigerant to further precipitate the sulfate. At this time, the washing water may be cooled to 0 to 10°C, which is a temperature lower than a cooling temperature of the first cooling unit 84. As the washing water is cooled to 0 to 10°C, at least 90% of the sulfate dissolved in the liquid state in the washing water may be precipitated in a solid state, and about 30% of the nitrate dissolved in the liquid state may be precipitated in a solid state. The washing water passed through the second cooling unit 86 is supplied back to the separation unit 85 in a state including the precipitated sulfate and nitrate. The separation unit 85 mixes the washing water passed through the first cooling unit 84 and the washing water passed through the second cooling unit 8, and supplies the washing water containing the solid state sulfate and the solid state nitrate to the filter unit 88.

The filter unit 88 separates the solid state sulfate and nitrate from the washing water and discharges them to the sea. In addition, the filter unit 88 supplies to the washing water that the solid state sulfate and nitrate are separated, specifically, the washing water containing sulfuric acid or liquid state sulfate, and nitric acid or liquid state nitrate to the storage tank 89. Since more than 90% of the sulfate dissolved in the liquid state in the washing water is precipitated and discharged into the sea, the washing water in which the nitric acid or the liquid state nitrate is concentrated at a high concentration may be stored in the storage tank 89. The high concentration of nitrate stored in the storage tank 89 may be treated at a port or the like, or mixed with the washing water on the high seas and discharged in a diluted state.

When only the scrubber 30 is operated to remove only sulfur oxides, the first oxidation unit 40 and the second oxidation unit 50 do not operate, and the exhaust gas passed through the exhaust gas pipe 10 and the fresh water or the seawater or mixed water of the fresh water and the seawater supplied through the washing water supply pipe 20 gas-liquid contacts in scrubber 30. The sulfur oxides contained in the exhaust gas are removed by the gas-liquid reaction. The washing water from which the sulfur oxide is removed is discharged to the sea through the washing water discharge pipe 33 and a separate flow pipe (not shown).

The embodiments of the present invention have been described with reference to the accompanying drawings. However, it may be understood that those of ordinary skill in the art to which the present invention pertains may implement the present invention in other specific forms without changing its technical spirit or essential features. Therefore, it is to be understood that the above-described embodiments are illustrative in all aspects and not restrictive.

### [Reference Numeral]

| | | | |
|---|---|---|---|
| 1: | apparatus for reducing pollutants in exhaust gas | | |
| 10: | exhaust gas pipe | 20: | washing water supply pipe |
| 21: | fresh water storage tank | 30: | scrubber |
| 30a: | spray nozzle | 31: | first contact |
| 31a: | mixer | 31b: | stirring panel |
| 32: | second contact | 32a: | droplet separator |
| 32b: | exhaust fan | 33: | washing water discharge pipe |
| 34: | exhaust pipe | 40: | first oxidation unit |
| 50: | second oxidation unit | 60: | storage |
| 61: | circulation pipe | 62: | first filtration unit |
| 63: | flow pipe | 70: | neutralizing agent supply unit |
| 71: | sensor unit | 72: | control unit |
| 80: | water treatment unit | 81: | second filtration unit |
| 82: | oxidation catalyst separation unit | 82a: | partition wall |
| 83: | salt storage tank | 84: | first cooling unit |
| 85: | separation unit | 86: | second cooling unit |
| 87: | cooler | 88: | filter unit |
| 89: | storage tank | | |

## Claims

1. An apparatus for reducing pollutants in exhaust gas, comprising:
an exhaust pipe for supplying the exhaust gas from a combustion engine mounted on an offshore structure;
a washing water supply pipe for supplying washing water;
a scrubber to which the exhaust gas pipe and the washing water supply pipe are connected, wherein a spray nozzle for spraying the washing water to the exhaust gas supplied from the exhaust gas pipe is installed inside the scrubber;
a first oxidation unit for primary oxidizing the exhaust gas by spraying a first oxidant to the exhaust gas pipe; and
a second oxidation unit for spraying an oxidation catalyst that is a mixture of an inorganic metal compound containing a transition metal hydroxide and an organic compound containing sulfoxide into the scrubber as a second oxidant so as to secondary oxidize the exhaust gas and to prevent reverse reaction.

2. The apparatus of claim 1, wherein the transition metal hydroxide is supported on silica nanoparticles.

3. The apparatus of claim 2, wherein the silica nanoparticles and the transition metal hydroxide are present in a floating form in a mixture of the organic compound containing sulfoxide and water.

4. The apparatus of claim 1, wherein the transition metal hydroxide comprises one or more metals selected from cobalt (Co), nickel (Ni), copper (Cu), iron (Fe), manganese (Mn), chromium (Cr), rhodium (Rh), ruthenium (Ru), molybdenum (Mo), osmium (Os), platinum (Pt), tungsten (W), zinc (Zn), vanadium (V), titanium (Ti), zirconium (Zr), palladium (Pd), iridium (Ir).

5. The apparatus of claim 1, further comprising:
a storage connected to a lower portion of the scrubber and storing the washing water and the oxidation catalyst discharged from the scrubber; and
a circulation pipe connecting the storage and the washing water supply pipe to recirculate the washing water and the oxidation catalyst.

6. The apparatus of claim 5, further comprising:
a water treatment unit for removing salt from a mixed liquor of the washing water and the oxidation catalyst discharged from the scrubber, and for recirculating the washing water and the oxidation catalyst back to the scrubber.

7. The apparatus of claim 6, wherein the water treatment unit comprises an oxidation catalyst separation unit for receiving the mixed liquor and separating it into the oxidation catalyst and the washing water containing the salt using a specific gravity difference.

8. The apparatus of claim 7, wherein the water treatment unit further comprises:
a first cooling unit for receiving the washing water containing the salt and primary cooling it to precipitate sulfate; and
a filter unit connected to a rear end of the first cooling unit to separate solid phase sulfate from the washing water containing the salt.

9. The apparatus of claim 8, wherein the water treatment unit further comprises:
a separation unit installed between the first cooling unit and the filter unit, the separation unit using the specific gravity difference to separate the washing water containing no solid phase sulfate; and
a second cooling unit for precipitating the sulfate by secondary cooling the washing water containing no solid phase sulfate separated from the separation unit to a lower temperature than the first cooling unit.

10. The apparatus of claim 9, wherein the washing water passed through the second cooling unit is supplied to the separation unit again.

11. The apparatus of claim 1, wherein the scrubber comprises:
a first contact having an upper portion communicating with the exhaust gas pipe, wherein at least one stirring panel and mixer for mixing the exhaust gas with the washing water and the oxidation catalyst are installed in the first contact along a flow direction of the exhaust gas; and
a second contact communicating with the first contact to form a refraction portion, wherein a droplet separator for condensing moisture particles in contact with the exhaust gas is installed in the second contact.

12. The apparatus of claim 11, wherein the scrubber further comprises:
an exhaust fan installed on a top of the droplet separator to discharge the exhaust gas to the outside.
